# EUROPEAN PATENT SPECIFICATION

(11) **EP 3 222 431 B1**
(45) Date of publication and mention of the grant of the patent: **19.06.2019**
(21) Application number: 15861107.9
(22) Date of filing: 11.11.2015
(51) Int. Cl.: B41J 2/447, B41J 2/45, G02B 3/00, G02B 5/00, H04N 1/036

(54) **LIGHT SOURCE UNIT**
LICHTQUELLENEINHEIT
UNITÉ DE SOURCE LUMINEUSE

(30) Priority: 21.11.2014 JP 2014236090
(43) Date of publication of application: 27.09.2017
(73) Proprietor: Konica Minolta, Inc., Tokyo 100-7015 (JP)
(72) Inventor: TAGAWA, Tomohiko, Tokyo 100-7015 (JP); FUJIMOTO, Akihiro, Tokyo 100-7015 (JP)
(74) Representative: Gille Hrabal
(86) International application number: PCT/JP2015/081702
(87) International publication number: WO 2016/080257

(56) References cited:
- EP-A2- 2 012 145
- JP-A- H0 943 538
- JP-A- H04 303 668
- JP-A- 2001 091 877
- JP-A- 2008 087 352
- JP-A- 2009 037 199
- JP-A- 2010 014 881
- JP-A- 2011 062 948
- JP-A- 2011 118 166
- US-A- 5 444 520
- US-A1- 2011 069 133

## Description

### Technical Field

The present invention relates to a light source unit, in particular, to a light source unit to be preferably used, for example, in a print head of an electrophotographic printer.

### Background Art

Conventionally, an electrophotographic printer being an image forming apparatus has a built-in light source unit, called a print head, which selectively emits light to a photoreceptor, thereby forming latent images. (See Patent Documents 1 to 3.)

In the print head of Patent Document 1, a head substrate (450; glass substrate) provided with a group of light emitting elements (410), a light shielding member (440) in which light guiding holes (4410) are formed, and a micro lens array (430) are fixed to a case (420) in a state of being stacked in this order. More specifically, the head substrate is arranged between the case and a back cover (470), and the back cover is pressed to and fixed to the case with a retainer (460). The light shielding member and the micro lens array are fitted into and fixed to an opening part of the case. In this configuration, light of the light emitting elements passes through the light guiding holes, and forms, with the micro lens array, images on a photoreceptor.

The print head of Patent Document 2 employs the same configuration as the print head of Patent Document 1. Besides, in Patent Document 2, there is disclosed an embodiment in which (i) a head substrate (450) and a light shielding member (440) and (ii) the light shielding member and a micro lens array (4301) are each glued with an adhesive (436).

In the print head of Patent Document 3, LED elements (30) are fixed to a holder (34) via a wiring substrate (33), and a lens array unit (1) in which lens plates (11) including micro lenses (12) are fixed to a light shielding member (13) is also fixed to the holder.

From EP 2 012 145 A2 a light source unit is known, which differs from the subject-matter of claim 1 in that the lens array is not fixed directly to the light emitting substrate.

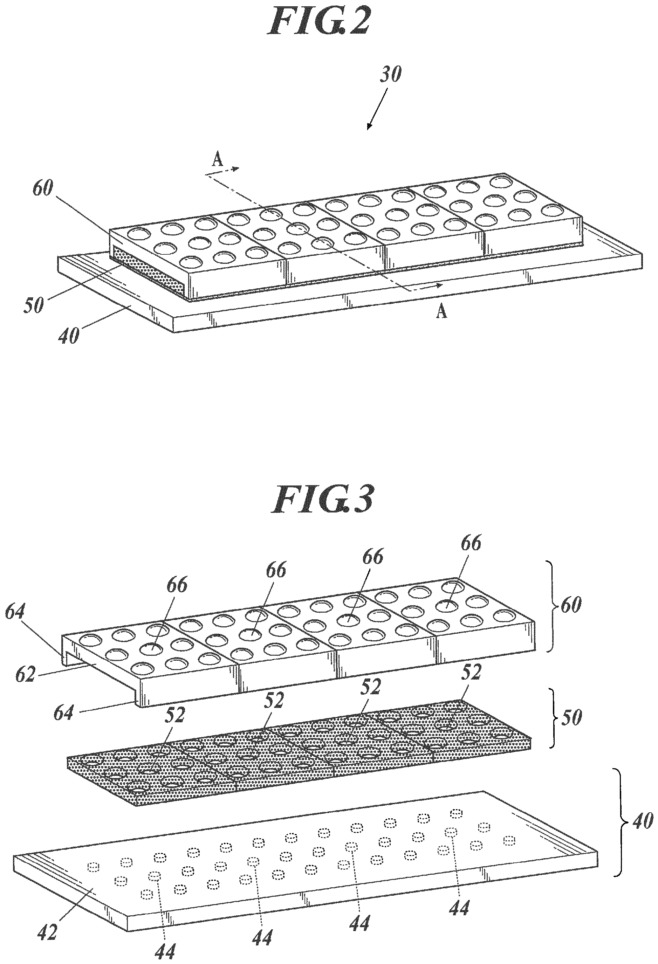

Patent Document 1: Japanese Patent Application Publication No. 2009-37199 (See Paragraphs [0047] to [0052], FIG. 3, and FIG. 4.)
Patent Document 2: Japanese Patent Application Publication No. 2009-37200 (See Paragraphs [0046] to [0051], FIG. 3, FIG. 4, Paragraphs [0096] to [0097], and FIG. 9.)
Patent Document 3: Japanese Patent Application Publication No. 2010-72557 (See Paragraphs [0013] to [0022] and FIG. 3 to FIG. 5.)

### Summary of the Invention

### Problems to be Solved by the Invention

In the configurations of Patent Documents 1 and 2, the micro lens array is divided so that distortion due to thermal expansion of the micro lens array is absorbed. However, materials of the head substrate, the light shielding member and the micro lens array and material of the case are different, and accordingly difference is generated in linear expansion coefficient. Hence, depending on the material of the case, because of change in environmental temperature, position shift occurs in these components, and optical axis deviation occurs between the light emitting elements and the micro lens array. This makes it impossible for light of the light emitting elements to form clear images.

Further, because in the configurations of Patent Documents 1 and 2, a large number of components, which includes the case in addition to the head substrate, the light shielding member and the micro lens array, are used, burdens in terms of time and costs, for example, for stock management, assembling and processing accuracy of components are large.

In the embodiment disclosed in FIG. 9 of Patent Document 2 too, because of change in environmental temperature, the adhered components are pulled to each other by expansion or contraction, and distortion due to warping or twisting of the components, i.e. the head substrate, the light shielding member and the micro lens array, occurs therebetween, and as with the above, optical axis deviation occurs between the light emitting elements and the micro lens array.

In the configuration of Patent Document 3 too, as with the configurations of Patent Documents 1 and 2, because the wiring substrate, the light shielding member and the lens plates are fixed to the holder, optical axis deviation may occur depending on the material of the holder, and also because the number of components is large, burdens in terms of time and costs entailed by that are large.

Therefore, a main object of the present invention is to provide a light source unit which can prevent optical axis deviation from occurring and also contribute to reduction of the number of components.

### Means for Solving the Problems

In order to solve the above problems, according to the present invention, there is provided a light source unit comprising the features defined in claim 1.

### Advantageous Effects of the Invention

According to the present invention, the light emitting substrate, the light shielding body and the lens array are positioned without depending on a fixing member (holding member), such as a case or a holder. Therefore, the present invention can prevent optical axis deviation from occurring and also contribute to reduction of the number of components.

### Brief Description of the Drawings

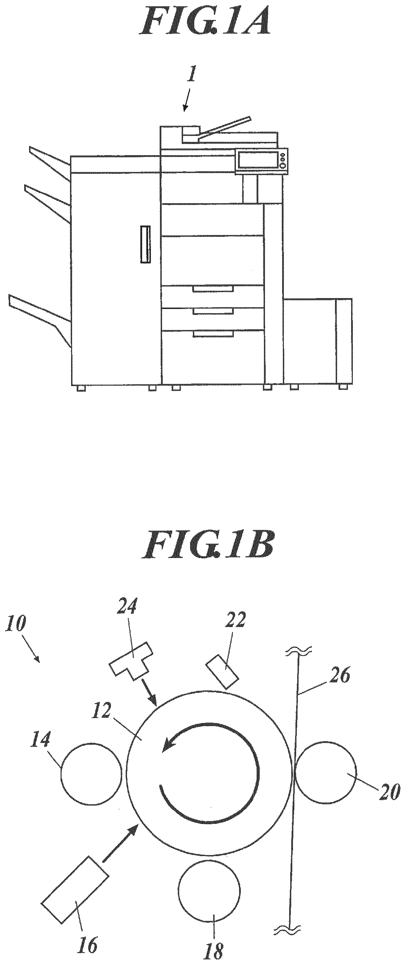

FIG. 1A shows a schematic configuration of an image forming apparatus.
FIG. 1B shows a schematic configuration of an image forming unit.
FIG. 2 is a perspective view showing a schematic configuration of a light source unit.
FIG. 3 is an exploded perspective view of that shown in FIG. 2.

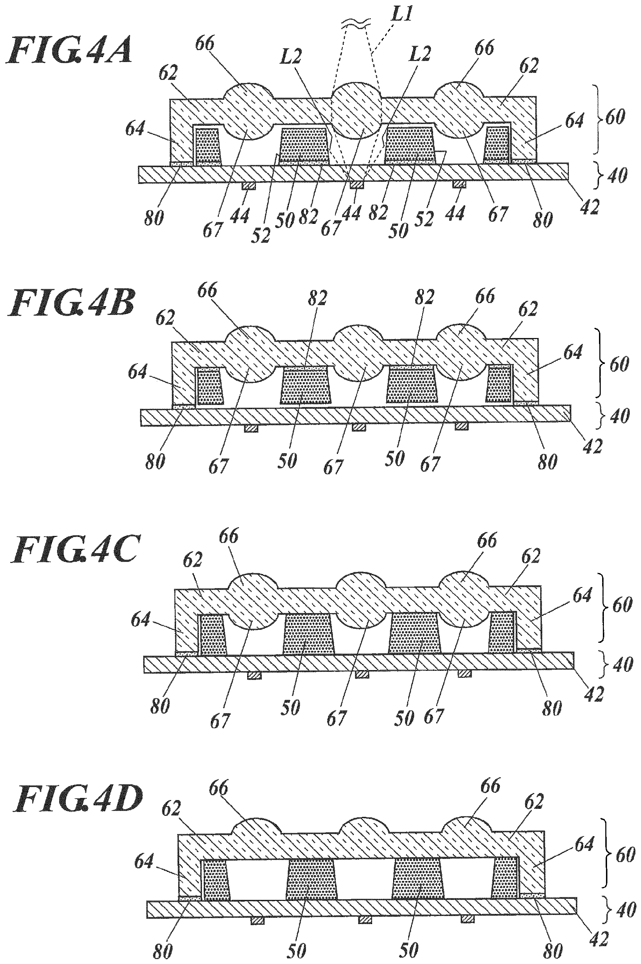

FIG. 4A is a cross-sectional view along A-A line in FIG. 2.
FIG. 4B shows a modification of that shown in FIG. 4A.
FIG. 4C shows a modification of that shown in FIG. 4A.
FIG. 4D shows a modification of that shown in FIG. 4A.

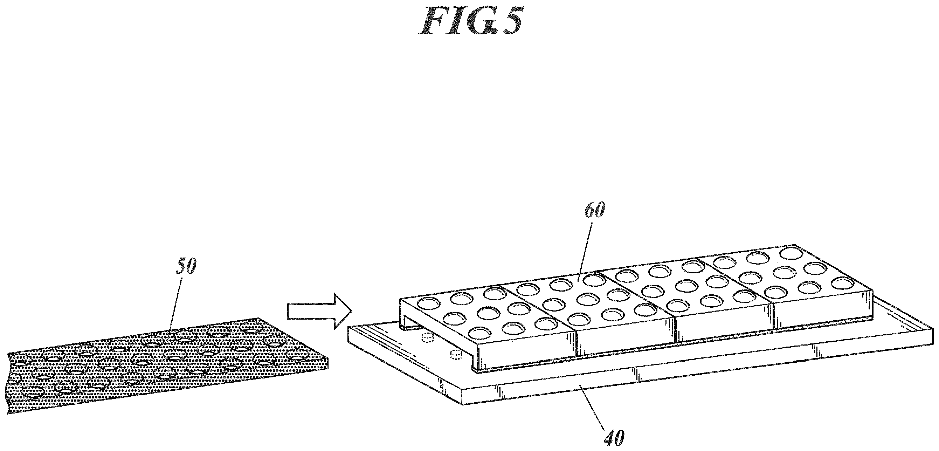

FIG. 5 is an illustration to explain how a light shielding body is held.

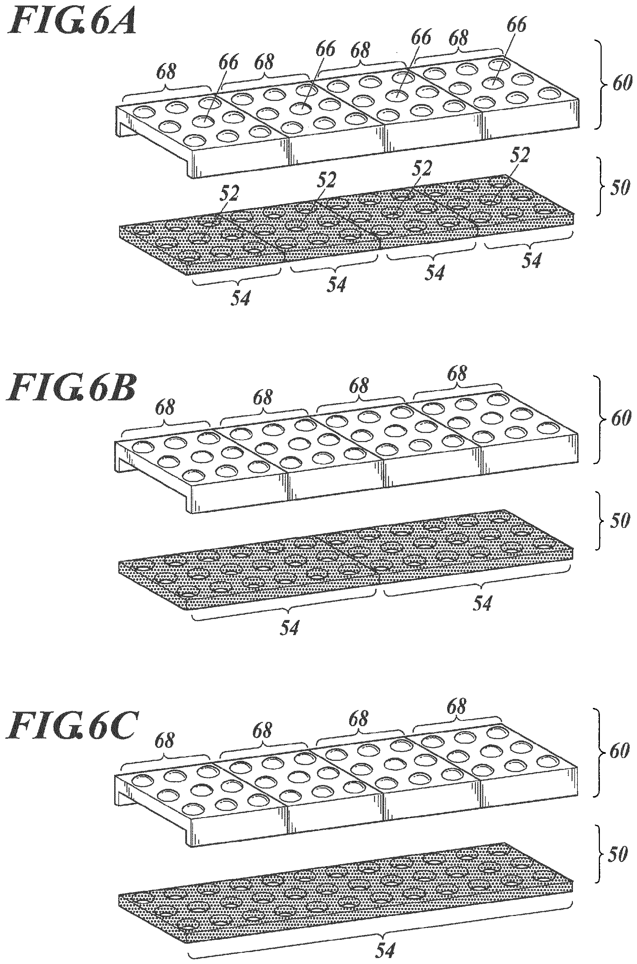

FIG. 6A is an illustration to explain a relationship between a lens array and the light shielding body.
FIG. 6B shows a modification of that shown in FIG. 6A.
FIG. 6C shows a modification of that shown in FIG. 6A.

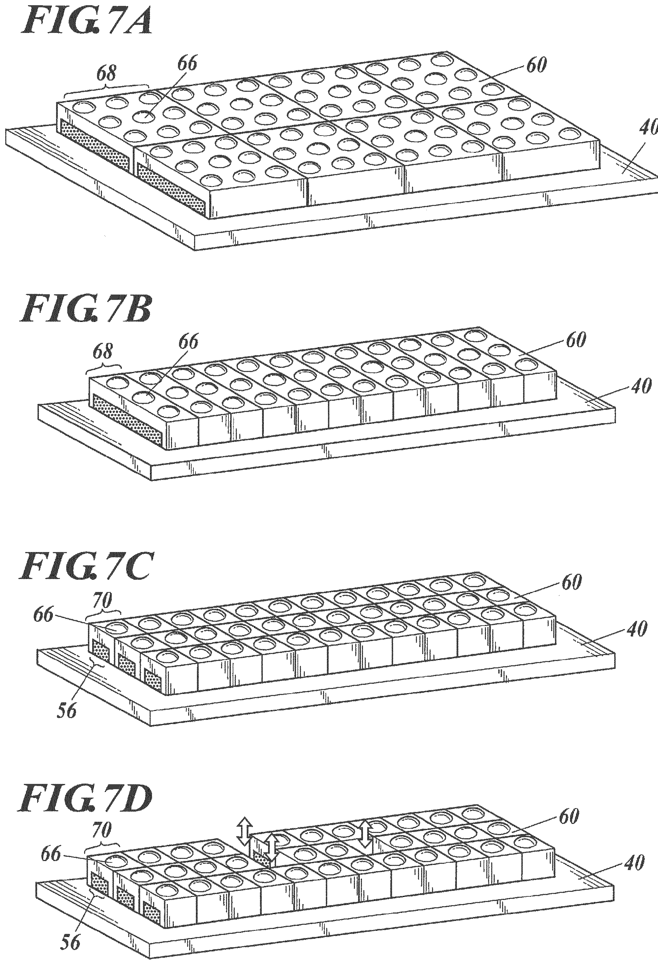

FIG. 7A shows an instance where the number of units in the lens array has been changed.
FIG. 7B shows an instance where the number of units in the lens array and the number of lenses in each unit have been changed.
FIG. 7C shows another instance where the number of units in the lens array and the number of lenses in each unit have been changed.
FIG. 7D shows that the lens array can be replaced in each of lenses.

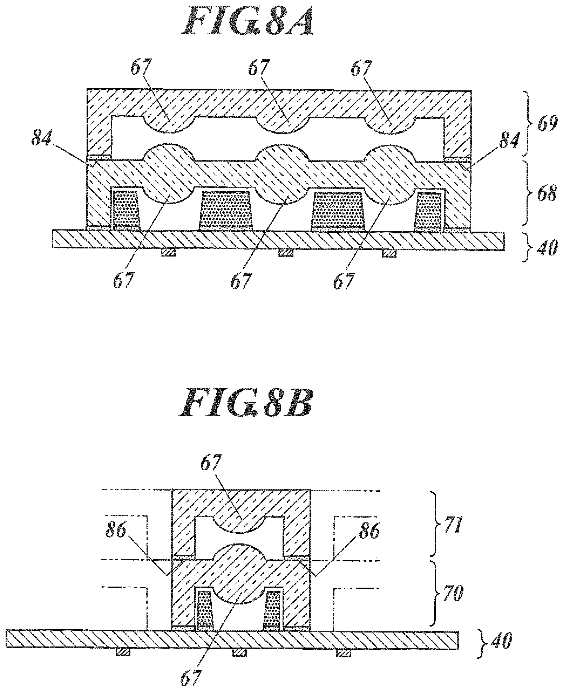

FIG. 8A shows an instance where on the lens array, another lens array is placed in each of units.
FIG. 8B shows an instance where on the lens array, another lens array is placed in each of lenses.

### Embodiments for Carrying out the Invention

Hereinafter, preferred embodiment(s) of the present invention are described with reference to the drawings.

As shown in FIG. 1A, an image forming apparatus 1 is, what is called, an electrophotographic printer which forms images on paper, and has a built-in image forming unit 10 (see FIG. 1B) to transfer toner for developing to paper.

As shown in FIG. 1B, the image forming unit 10 includes multiple components around a photoreceptor 12. Around the photoreceptor 12, mainly, a charging roller 14, a print head 16, a developing device 18, a transfer device 20, a cleaning device 22 and a charge neutralizing device 24 are installed in this order from the upstream side to the downstream side of a rotation direction of the photoreceptor 12.

To the charging roller 14, a bias having polarity according to the charge polarity of toner is applied from a power supply device (not shown), and the charging roller 14 charges the photoreceptor 12.

The print head 16 is constituted of a light source unit 30 (see FIG. 2) having light emitting elements and lenses, and emits light to the photoreceptor 12 from the light emitting elements via the lenses, thereby forming electrostatic latent images on the charged photoreceptor 12.

The developing device 18 supplies toner to the photoreceptor 12, thereby developing, with the toner, the electrostatic latent images formed on the photoreceptor 12.

The transfer device 20 rotates while abutting the photoreceptor 12 via paper 26, thereby transferring the toner on the photoreceptor 12 to the paper 26.

The cleaning device 22 is constituted of, what is called, a blade and the like, and scrapes and removes the remaining toner on the photoreceptor 12 therefrom.

The charge neutralizing device 24 uniformly sheds light on the photoreceptor 12, thereby removing the remaining electric charges on the photoreceptor 12.

According to the image forming apparatus 1, these components perform their respective actions described above on the photoreceptor 12 so as to form images on the paper 26.

Although only one image forming unit 10 is shown in FIG. 1B, a plurality of image forming units which house toners of different colors may be provided so as to form color images. Further, although toner images are transferred directly from the photoreceptor 12 to the paper 26 in FIG. 1B, toner images may be transferred to the paper 26 via an intermediate transfer body.

As shown in FIG. 2 and FIG. 3, the light source unit 30 mainly includes a light emitting substrate 40, a light shielding body 50 and a lens array 60, and has a configuration in which these components are stacked in this order.

As shown in FIG. 3 in detail, the light emitting substrate 40 includes a transparent substrate 42 and a plurality of light emitting elements 44. The transparent substrate 42 is a glass substrate which is transparent and light-transmissive. The light emitting elements 44 are formed on the lower surface of the transparent substrate 42. The light emitting elements 44 are constituted of LED (Light Emitting Diode) elements, organic EL (Electro Luminescence) elements or the like, preferably organic EL elements.

The light shielding body 50 is a flat plate-shaped member which blocks unnecessary light of the light emitting elements 44. The light shielding body 50 is constituted of a substrate made of glass or resin containing a light absorbent color material, such as a black pigment, or a metal plate painted black. In the light shielding body 50, a plurality of light guiding holes 52 is formed. The light shielding body 50 may realize the light shielding (blocking) function with a light shielding film(s) attracted to or a light shielding layer(s) formed on the upper surface and/or the lower surface thereof and/or the inner surfaces of the light guiding holes 52.

The lens array 60 is an optical member which is made of resin and includes: a flat plate-shaped base part 62; two leg parts 64 which are disposed at the both ends in the shorter direction of the base part 62 and each extend in the longer direction thereof; and a plurality of convex lenses 66, 67. The base part 62, the leg parts 64 and the lenses 66, 67 are integrally formed. The base part 62 is a part serving as a base of the lens array 60, and on one surface (lower surface) of the base part 62, the leg parts 64 and the lenses 67 are formed, and on the other surface (upper surface) of the base part 62, the lenses 66 are formed.

As shown in FIG. 2 and FIG. 4A to FIG. 4D, the lens array 60 is fixed directly to the light emitting substrate 40 in the state in which the light shielding body 50 is positioned between the light emitting substrate 40 and the lens array 60.

As shown in FIG. 4A in detail, the leg parts 64 of the lens array 60 are adhered to the upper surface of the transparent substrate 42 of the light emitting substrate 40 with an adhesive 80 in a state in which the lens array 60 is positioned with respect to the light emitting substrate 40 such that the optical axes of the lenses 66, 67 face the centers of their respective corresponding light emitting elements 44. Thus, the lens array 60 is fixed directly to the light emitting substrate 40 in the form of the lens array 60 striding over the light shielding body 50.

The leg parts 64 of the lens array 60 may be fixed to the transparent substrate 42 by welding. In this instance too, the lens array 60 is fixed directly to the light emitting substrate 40 in the form of the lens array 60 striding over the light shielding body 50.

In the invention of this application, the "fixed directly" means that the lens array 60 and the light emitting substrate 40 are fixed to each other by using a method, such as adhesion or welding, such that the lens array 60 is positioned and fixed with respect to the light emitting substrate 40 approximately in the optical axis direction of the lenses 66, 67 of the lens array 60. A configuration in which an adhesive is present between the lens array 60 and the light emitting substrate 40 and a configuration in which a separate sheet-shaped member other than an adhesive is present between the lens array 60 and the light emitting substrate 40 are also within the range of the "fixed directly".

The light shielding body 50 is positioned with respect to the light emitting substrate 40 such that the centers of the respective light guiding holes 52 face the centers of their respective corresponding light emitting elements 44, and is adhered, with an adhesive 82, to the upper surface of the transparent substrate 42 of the light emitting substrate 40. Note that the lens array 60 and the light shielding body 50 are not adhered to each other.

As shown in FIG. 4B, the light shielding body 50 may be adhered to the lower surface of the base part 62 of the lens array 60 with the adhesive 82. In this instance, the light emitting substrate 40 and the light shielding body 50 are not adhered to each other.

As shown in FIG. 4C, the light shielding body 50 may be fitted into the space formed between the transparent substrate 42 of the light emitting substrate 40 and the base part 62 and the leg parts 64 of the lens array 60.

In this instance, the size (width, height, length) of the light shielding body 50 and the size(s) (width, height, length) of the base part 60 and the leg parts 64 of the lens array 60 are determined such that the position of the light shielding body 50 with respect to the light emitting substrate 40 and the lens array 60 is within a range where the light shielding body 50 does not reduce the light shielding function. That is, the light shielding body 50 is positioned with respect to the lens array 60 and the light emitting substrate 40 in such a way as not to reduce the light shielding function, by making difference in size between the former and the latter be within a tolerance of fitting.

Note that because accuracy required to position the light shielding body 50 with respect to the lens array 60 and the light emitting substrate 40 is not as high as accuracy required to position the lens array 60 and the light emitting substrate 40 with respect to each other, even if the light shielding body 50 is formed to be a small size in anticipation that the space between the leg parts 64 becomes narrow by expansion of the lens array 60, the light shielding body 50 can be positioned in such a way as not to reduce the light shielding function.

When the light source unit 30 having the configuration shown in FIG. 4C is assembled, in order to avoid the lenses 67 and the light shielding body 50 contacting with each other, it is preferable that the lens array 60 be adhered to the light emitting substrate 40 after the light shielding body 50 is fitted into the space enclosed by the leg parts 64 of the lens array 60, or the lens array 60 be adhered to the light emitting substrate 40 while the light shielding body 50 is fitted to the lens array 60 after the light shielding body 50 is arranged on the light emitting substrate 40.

If the lens array 60 does not interfere with the light shielding body 50 because the lower surface of the base part 62 of the lens array 60 is flat as shown in FIG. 4D, the lenses 67 are concave lenses, or the lenses 67 are convex lenses but the height thereof is sufficiently small, as shown in FIG. 5, the light shielding body 50 may be inserted and fitted into the space between the leg parts 64 of the lens array 60 after the leg parts 64 of the lens array 60 are adhered to the light emitting substrate 40. Further, if influence of adjacent light is not large, grooves corresponding to the convex lenses 67 may be formed in the light shielding body 50, and the light shielding body 50 may be fitted into the space between the leg parts 64 of the lens array 60 after the leg parts 64 of the lens array 60 are adhered to the light emitting substrate 40.

As shown in FIG. 2 and FIG. 6A, the lens array 60 comprises four units 68 and fixed to the light emitting substrate 40 in each of the units. In each of the four units 68, a predetermined number of lenses 66, 67 are formed. For each unit 68, 3 (columns) × 3 (rows) = 9 pairs of lenses 66, 67 are formed.

As with the lens array 40, the light shielding body 50 also comprises four units 54 and fixed to the light emitting substrate 40 in each of the units. In each of the four units 54, the light guiding holes 52 are formed at the positions corresponding to the lenses 66, 67. For each unit 54, 3 (columns) × 3 (rows) = 9 light guiding holes 52 are formed.

As shown in FIG. 4A, according to the light source unit 30, the light emitting elements 44 of the light emitting substrate 40, the light guiding holes 52 of the light shielding body 50 and the lenses 66, 67 of the lens array 60 correspond to each other one-to-one, and when each light emitting element 44 emits light, this light L1 passes through the transparent substrate 42 and its corresponding light guiding hole 52, enters its corresponding lenses 66, 67, and forms an image on the photoreceptor 12 with the lenses 66, 67. Light L2 emitted from the light emitting element 44 and radially spread is blocked and absorbed by the light shielding body 50 as unnecessary light so that the light L2 is prevented from entering the next lenses 66, 67 which do not correspond to the light emitting element 44.

The number of units 54 in the light shielding body 50 can be changed according to the number of units 68 in the lens array 60.

As shown in FIG. 6B, it is possible that the light shielding body 50 comprises two units 54, and each unit 54 is formed to correspond to two units 68. That is, the number of units 54 in the light shielding body 50 may be smaller than the number of units 68 in the lens array 60. This can reduce the number of components as compared with the form shown in FIG. 6A.

As shown in FIG. 6C, it is possible that the light shielding body 50 comprises one (single) unit 54, and this one unit 54 is formed to correspond to four units 68. This can further reduce the number of components.

As described above, the light emitting substrate 40 is made of glass, and the lens array 60 is made of resin. The light shielding body 50 can be made of any of resin, glass and metal. In general, their linear expansion coefficients have a relationship of "resin > metal > glass".

Regardless of the material of the light shielding body 50, the number of units 54 in the light shielding body 50 may be four, which is the same as the number of units 68 in the lens array 60 (FIG. 6A), or two or one, which is less than the number of units 68 (FIG. 6B or FIG. 6C).

Preferably, the number of units 54 is changed according to the material of the light shielding body 50, namely, whether the light shielding body 50 is made of resin, glass or metal.

If the light shielding body 50 is made of resin, the number of units 54 in the light shielding body 50 is preferably four, which is the same as the number of units 68 in the lens array 60. In this instance, because the light shielding body 50 and the lens array 60 are made of the same or homogeneous material, and their linear expansion coefficients are the same or similar to each other, expansions or contractions of the light shielding body 50 and the lens array 60 due to change in environmental temperature can be synchronized.

If the light shielding body 50 is made of glass, the number of units 54 in the light shielding body 50 is preferably one, which is less than the number of units 68 in the lens array 60. In this instance, because the light shielding body 50 and the light emitting substrate 40 are made of the same or homogeneous material, and their linear expansion coefficients are the same or similar to each other, expansions or contractions of the light shielding body 50 and the light emitting substrate 40 due to change in environmental temperature can be synchronized.

If the light shielding body 50 is made of metal, the number of units 54 in the light shielding body 50 is preferably two, which is less than the number of units 68 in the lens array 60. In this instance, because the linear expansion coefficient of the light shielding body 50 is between the linear expansion coefficient of the lens array 60 and the linear expansion coefficient of the light emitting substrate 40, expansions or contractions of the light shielding body 50 and the lens array 60 and expansions or contractions of the light shielding body 50 and the light emitting substrate 40 due to change in environmental temperature can each be synchronized. If the light shielding body 50 is made of resin or glass having a linear expansion coefficient which is between the linear expansion coefficient of the lens array 60 and the linear expansion coefficient of the light emitting substrate 40 too, the number of units 54 in the light shielding body 50 can be two, which is less than the number of units 68 in the lens array 60.

The number of units 68 in the lens array 60 can be changed, and the number of lenses 66, 67 in the unit 68 can also be changed.

For example, as shown in FIG. 7A, the number of units 68 may be increased by increasing the number of rows of units 68 while keeping the number of lenses 66, 67 in each unit 68 unchanged.

The number of units 68 may be increased, as shown in FIG. 7B, by reducing the number of lenses 66, 67 in each unit 68 (by dividing the lenses 66, 67 by column).

In these instances too, as described with reference to FIG. 6A to FIG. 6C, the number of units 54 in the light shielding body 50 can be changed according to the number of units 68 in the lens array 60, and be the same as the number of units 68 or less than the number of units 68.

As shown in FIG. 7C, the lens array 60 may be divided into the lenses 66 or 67 and comprise a large number of simple units 70, each of which is fixed to the light emitting substrate 40. In this instance, the light shielding body 50 is also divided into the light guiding holes 52 and comprises a large number of simple units 56, so that the simple units 56 correspond to the simple units 70 one-to-one.

According to this form, as shown in FIG. 7D, the lens array 60 can be replaced in each of lenses from defective pieces to non-defective pieces.

On the lens array 60, another lens array 60 may be placed in each of units or in each of lenses. The number of lens arrays 60 to be piled up can also be changed.

FIG. 8A shows an instance where the lens arrays 60 are stacked in each of units.

In the instance shown in FIG. 8A, on the one shown in FIG. 4A, a unit 69 having a flat upper surface and a lower surface with the convex lenses 67 formed thereon is placed.

In the instance shown in FIG. 8A, to the upper surface of the unit 68 on the lower side, another unit 69 can be fixed with an adhesive 84. Alternatively, the unit 69 on the upper side may be fixed to the unit 68 on the lower side by welding.

When the lens arrays 60 are piled up in each of lenses too, as shown in FIG. 8B, to the upper surface of the simple unit 70 on the lower side, another simple unit 71 can be fixed with an adhesive 86. Alternatively, the simple unit 71 on the upper side may be fixed to the simple unit 70 on the lower side by welding.

According to the embodiment described above, the lens array 60 has the leg parts 64, and is fixed directly to the light emitting substrate 40 in the state in which the lens array 60 strides over the light shielding body 50 with the leg parts 64.

According to the embodiment, the light emitting substrate 40, the light shielding body 50 and the lens array 60 are positioned with respect to each other without depending on a fixing member (holding member), such as a case or a holder. Hence, it is unnecessary to give consideration to difference in linear expansion coefficient between these components and a fixing member, optical axis deviation between the light emitting elements 44 of the light emitting substrate 40 and the lenses 66, 67 of the lens array 60 can be prevented from occurring, and the number of components can be reduced at least by the fixing member.

Because the light shielding body 50 is adhered to one of the light emitting substrate 40 and the lens array 60 (FIG. 4A or FIG. 4B) or fitted between the light emitting substrate 40 and the lens array 60 (FIG. 4C), at least one of: the light shielding body 50 and the lens array 60; and the light shielding body 50 and the light emitting substrate 40 is not adhered to each other. Therefore, even if difference in expansion or contraction due to change in environmental temperature occurs between the components, distortion due to warping or twisting of the components, i.e. the light emitting substrate 40, the light shielding body 50 and the lens array 60, hardly occurs therebetween, and optical axis deviation can be prevented from occurring.

In particular, because no fixing member, such as a case or a holder, is necessary, and no component is present between the light emitting elements 44 of the light emitting substrate 40 and the lens array 60, a factor to cause optical axis deviation can be eliminated, and optical axis deviation can be prevented from occurring.

Also, time and costs can be shortened and reduced by those for manufacturing fixing members, and in manufacturing the light source unit 30, burdens in terms of time and costs, for example, for stock management, assembling and processing accuracy of components can be reduced.

Because the lens array 60 comprises a plurality of units 68, a mold to manufacture (mold resin into) the lens array 60 can be miniaturized to a size corresponding to the size of the unit 68 from the size of the lens array 60 itself.

This mold enables molding with space saving.

Further, during molding, this mold is more likely to stabilize molding temperature than a large mold and can improve maintainability, and after molding, allows the resin to be cooled in a short time and can realize high cycle molding.

Because the lens array 60 comprises a plurality of units 68, the number of lenses 66, 67 to be examined at once can be reduced from the number of lenses 66, 67 in the lens array 60 to the number of lenses 66, 67 in the unit 68.

In this instance, because the number of optical surfaces of the lenses 66, 67 is small, when the optical surfaces of the lenses 66, 67 are corrected, time and costs for processing and measurement can be saved.

The number of units 68 in the lens array 60 and the number of lenses 66, 67 in the unit 68 can be changed, and also the units 68 can be changed for the simple units 70. With this, the number of units 54 and the number of light guiding holes 52 in the light shielding body 50 can be changed, and also the units 54 can be changed for the simple units 56.

Thus, expansion or contraction of the lens array 60 due to change in environmental temperature can be minimized in each of units or in each of lenses. Further, degree of freedom in design in the longer direction or the shorter direction of the light source unit 30 increases, and a wide variety of lens arrays 60 can be provided in small lot, so that change in size of the light emitting substrate 40 and change in the number of light emitting elements 44 can be readily handled.

### Industrial Applicability

The present invention is a light source unit to be used, for example, in a print head of an electrophotographic printer, and can be preferably used, in particular, to prevent optical axis deviation from occurring and contribute to reduction of the number of components.

### Description of Reference Numerals

- 1: Image Forming Apparatus
- 10: Image Forming Unit
- 12: Photoreceptor
- 14: Charging Roller
- 16: Print Head
- 18: Developing Device
- 20: Transfer Device
- 22: Cleaning Device
- 24: Charge Neutralizing Device
- 26: Paper
- 30: Light Source Unit
- 40: Light Emitting Substrate
- 42: Transparent Substrate
- 44: Light Emitting Element
- 50: Light Shielding Body
- 52: Light Guiding Hole
- 54: Unit
- 56: Simple Unit
- 60: Lens Array
- 62: Base Part
- 64: Leg Part
- 66, 67: Lens
- 68, 69: Unit
- 70, 71: Simple Unit
- 80, 82, 84, 86: Adhesive

## Claims

1. A light source unit (30) comprising:
a light emitting substrate (40) including a plurality of light emitting elements (44);
a light shielding body (50) which blocks unnecessary light of the light emitting elements (44); and
a lens array (60) including a plurality of lenses (66, 67), wherein the light shielding body (50) is positioned between the light emitting substrate (40) and the lens array (60) **characterized in that** the lens array (60) is fixed directly to the light emitting substrate (40).

2. The light source unit (30) according to claim 1, wherein
the lens array (60) has leg parts (64) arranged to stride over the light shielding body (50), and the leg parts (64) of the lens array (60) are fixed to the light emitting substrate (40).

3. The light source unit (30) according to claim 2, wherein the leg parts (64) of the lens array (60) are fixed to the light emitting substrate (40) with an adhesive (80, 82, 84, 86) or by welding.

4. The light source unit (30) according to any one of claims 1 to 3, wherein the light shielding body (50) is adhered to only one of the light emitting substrate (40) and the lens array (60).

5. The light source unit (30) according to any one of claims 1 to 4, wherein
the lens array (60) comprises a plurality of units each including a predetermined number of lenses (66, 67), and
the lens array (60) is fixed to the light emitting substrate (40) in each of the units.

6. The light source unit (30) according to claim 5, wherein
the light shielding body (50) has a plurality of light guiding holes (52), and the light shielding body (50) comprises a plurality of units (54) each including a predetermined number of light guiding holes (52).

7. The light source unit (30) according to claim 6, wherein the light shielding body (50) comprises a number of the units each including the predetermined number of light guiding holes (52), the number of the units being less than a number of the units each including the predetermined number of lenses (66, 67).

8. The light source unit (30) according to claim 5, wherein the light shielding body (50) comprises a single unit (54) having a plurality of light guiding holes (52).

9. The light source unit (30) according to any one of claims 1 to 4, wherein
the lens array (60) is divided into the lenses (66, 67), the lens array (60) is fixed to the light emitting substrate (40) in each of the lenses (66, 67), the light shielding body (50) has a plurality of light guiding holes (52), and the light shielding body (50) is divided into the light guiding holes (52).

10. The light source unit (30) according to any one of claims 5 to 9, wherein on the lens array (60), another lens array (60) is placed in each of the units or in each of the lenses (66, 67).

11. The light source unit (30) according to claim 1, wherein the lens array (60) has leg parts (64) at both ends in a shorter direction of the lens array (60), the leg parts (64) extending in a longer direction of the lens array (60).

12. The light source unit (30) according to any one of claims 1 or 11, wherein an opening which accepts the light shielding body (50) is formed at an end in a longer direction of the lens array (60).

## Patentansprüche

1. Lichtquelleneinheit (30) mit:
einem Licht ausstrahlenden Substrat (40), welches eine Vielzahl von Licht ausendenden Elementen (44) umfasst;
einem Licht-Abschirmkörper (50), der unnötiges Licht der Licht ausendenden Elemente (44) abhält; und
einer Linsenanordnung (60), welche eine Vielzahl von Linsen (66, 67) umfasst, wobei
der Licht-Abschirmkörper (50) zwischen dem Licht ausstrahlenden Substrat (40) und der Linsenanordnung (60) angeordnet ist, **dadurch gekennzeichnet, dass** die Linsenanordnung (60) direkt an dem Licht ausstrahlenden Substrat (40) befestigt ist.

2. Lichtquelleneinheit (30) gemäß Anspruch 1, wobei
die Linsenanordnung (60) Beinteile (64) aufweist, die dafür angeordnet sind, sich über den Licht-Abschirmkörper (50) zu bewegen, und wobei die Beinteile (64) der Linsenanordnung (60) an dem Licht ausstrahlenden Substrat (40) befestigt sind.

3. Lichtquelleneinheit (30) gemäß Anspruch 2, wobei die Beinteile (64) der Linsenanordnung (60) an dem Licht ausstrahlenden Substrat (40) mit einem Klebstoff (80, 82, 84, 86) oder durch Schweißen befestigt sind.

4. Lichtquelleneinheit (30) gemäß irgendeinem der Ansprüche 1 bis 3, wobei der Licht-Abschirmkörper (60) nur entweder an dem Licht ausstrahlenden Substrat (40) oder an der Linsenanordnung (60) befestigt ist.

5. Lichtquelleneinheit (30) gemäß irgendeinem der Ansprüche 1 bis 4, wobei
die Linsenanordnung (60) eine Vielzahl von Einheiten aufweist, die jeweils eine vorbestimmte Anzahl von Linsen (66, 67) umfassen, und
die Linsenanordnung (60) in jeder der Einheiten an dem Licht ausstrahlenden Substrat (40) befestigt ist.

6. Lichtquelleneinheit (30) gemäß Anspruch 5, wobei
der Licht-Abschirmkörper (50) eine Vielzahl von Lichtführungslöchern (62) aufweist, und wobei der Licht-Abschirmkörper (50) eine Vielzahl von Einheiten (54) aufweist, die jeweils eine vorbestimmte Anzahl von Lichtführungslöchern (52) umfassen.

7. Lichtquelleneinheit (30) gemäß Anspruch 6, wobei der Licht-Abschirmkörper (50) eine Anzahl der Einheiten, die jeweils die vorbestimmte Anzahl von Lichtführungslöchern (52) umfassen, aufweist, wobei die Anzahl dieser Einheiten geringer ist als eine Anzahl der Einheiten, die jeweils die vorbestimmte Anzahl von Linsen (66, 67) umfassen.

8. Lichtquelleneinheit (30) gemäß Anspruch 5, wobei der Licht-Abschirmkörper (50) eine einzige Einheit (54) mit einer Vielzahl von Lichtführungslöchern (52) aufweist.

9. Lichtquelleneinheit (30) gemäß irgendeinem der Ansprüche 1 bis 4, wobei
die Linsenanordnung (60) in die Linsen (66, 67) unterteilt ist, wobei die Linsenanordnung (60) in jeder der Linsen (66, 67) an dem Licht ausstrahlenden Substrat (40) befestigt ist, der Licht-Abschirmkörper (50) eine Vielzahl von Lichtführungslöchern (52) aufweist und der Licht-Abschirmkörper (50) in die Lichtführungslöcher (52) unterteilt ist.

10. Lichtquelleneinheit (30) gemäß irgendeinem der Ansprüche 5 bis 9, wobei an der Linsenanordnung (60) eine weitere Linsenanordnung (60) in jeder der Einheiten oder in jeder der Linsen (66, 67) angeordnet ist.

11. Lichtquelleneinheit (30) gemäß Anspruch 1, wobei die Linsenanordnung (60) an beiden Enden in der kürzeren Richtung der Linsenanordnung (60) Beinteile (64) aufweist, wobei sich die Beinteile (64) in die längere Richtung der Linsenanordnung (60) erstrecken.

12. Lichtquelleneinheit (30) gemäß irgendeinem der Ansprüche 1 oder 11, wobei eine Öffnung, welche den Licht-Abschirmkörper (50) aufnimmt, an einem Ende in der längeren Richtung der Linsenanordnung (60) ausgebildet ist.

## Revendications

1. Unité de sources de lumière (30) comprenant :
un substrat émettant de la lumière (40) comprenant une pluralité d'éléments émettant de la lumière (44) ;
un corps de blindage de lumière (50), qui bloque de la lumière non-nécessaire des éléments émettant de la lumière (44) ; et
un ensemble de lentilles (60) comprenant une pluralité de lentilles (66, 67), dans lequel le corps de blindage de lumière (50) est positionné entre le substrat émettant de la lumière (40) et l'ensemble de lentilles (60), **caractérisé en ce que** l'ensemble de lentilles (60) est directement fixé au substrat émettant de la lumière (40).

2. Unité de sources de lumière (30) selon la revendication 1, dans lequel l'ensemble de lentilles (60) comprend des parties de jambe (64) disposées pour se déplacer sur le corps de blindage de lumière (50), et les parties de jambe (64) de l'ensemble de lentilles (60) sont fixées au substrat émettant de la lumière (40).

3. Unité de sources de lumière (30) selon la revendication 2, dans lequel les parties de jambe (64) de l'ensemble de lentilles (60) sont fixées au substrat émettant de la lumière (40) à l'aide d'un adhésif (80, 82, 84, 86) ou par moyen de soudage.

4. Unité de sources de lumière (30) selon l'une quelconque des revendications 1 à 3, dans lequel le corps de blindage de lumière (50) n'adhère qu'à un élément parmi le substrat émettant de la lumière (40) et l'ensemble de lentilles (60).

5. Unité de sources de lumière (30) selon l'une quelconque des revendications 1 à 4, dans lequel
l'ensemble de lentilles (60) comprend une pluralité d'unités, dont chacune comprend un nombre prédéterminé de lentilles (66, 67), et
l'ensemble de lentilles (60) est fixé au substrat émettant de la lumière (40) dans chacune des unités.

6. Unité de sources de lumière (30) selon la revendication 5, dans lequel
le corps de blindage de lumière (50) comprend une pluralité de trous de guidage de lumière (52), et le corps de blindage de lumière (50) comprend une pluralité d'unités (54), dont chacune comprend un nombre prédéterminé de trous de guidage de lumière (52).

7. Unité de sources de lumière (30) selon la revendication 6, dans lequel le corps de blindage de lumière (50) comprend un nombre des unités, dont chacune comprend un nombre prédéterminé de trous de guidage de lumière (52), le nombre de ces unités étant plus faible qu'un nombre des unités, dont chacune comprend le nombre prédéterminé de lentilles (66, 67).

8. Unité de sources de lumière (30) selon la revendication 5, dans lequel le corps de blindage de lumière (50) comprend une seule unité (54) comprenant une pluralité de trous de guidage de lumière (52).

9. Unité de sources de lumière (30) selon l'une quelconque des revendications 1 à 4, dans lequel
l'ensemble de lentilles (60) est divisé en les lentilles (66, 67), l'ensemble de lentilles (60) est fixé au substrat émettant de la lumière (40) dans chacune des lentilles (66, 67), le corps de blindage de lumière (50) comprend une pluralité de trous de guidage de lumière (52) et le corps de blindage de lumière (50) est divisé en les trous de guidage de lumière (52).

10. Unité de sources de lumière (30) selon l'une quelconque des revendications 5 à 9, dans lequel dans l'ensemble de lentilles (60) un autre ensemble de lentilles (60) est disposé dans chacune des unités ou dans chacune des lentilles (66, 67).

11. Unité de sources de lumière (30) selon la revendication 1, dans lequel l'ensemble de lentilles (60) comprend des parties de jambe (64) aux deux extrémités dans la direction plus courte de l'ensemble de lentilles (60), les parties de jambe (64) s'étendant dans la direction plus longue de l'ensemble de lentilles (60).

12. Unité de sources de lumière (30) selon l'une quelconque des revendications 1 ou 11, dans lequel une ouverture, qui reçoit le corps de blindage de lumière (50), est formée à une extrémité dans la direction plus longue de l'ensemble de lentilles (60).
